# EUROPÄISCHE PATENTSCHRIFT

(11) **EP 0 366 601 B1**
(45) Veröffentlichungstag und Bekanntmachung des Hinweises auf die Patenterteilung: **22.12.1993**
(21) Anmeldenummer: 89810742.0
(22) Anmeldetag: 29.09.1989
(51) Int. Cl.: B01L 7/02, B01D 3/08

(54) **Rotationsverdampfer**
Rotary evaporator
Vaporisateur rotativ

(30) Priorität: 21.10.1988 CH 3925/88
(43) Veröffentlichungstag der Anmeldung: 02.05.1990
(73) Patentinhaber: Büchi Laboratoriums-Technik AG, CH-9230 Flawil (CH)
(72) Erfinder: Trunner, Josef, CH-8617 Mönchaltorf (CH)
(74) Vertreter: Wenger, René

(56) Entgegenhaltungen:
- EP-A- 0 156 937
- DE-A- 908 672
- DE-A- 3 001 995
- DE-A- 3 519 704
- GB-A- 1 541 905
- US-A- 3 468 136

## Beschreibung

Die Erfindung betrifft einen Rotationsverdampfer gemäss dem Oberbegriff von Anspruch 1. Derartige Rotationsverdampfer, deren Bad mit heissem Wasser oder für höhere Temperaturen mit heissem Oel gefüllt ist, sind vor allem im Laborbereich seit langer Zeit bekannt und gebräuchlich.

Beim Destillieren mittels Rotationsverdampfer ist es erforderlich, dass der Heizvorgang nach Ablauf einer bestimmten Zeit oder beim Erreichen einer bestimmten Reaktion unverzüglich unterbrochen wird. Dies wird dadurch erreicht, dass das Reaktionsgefäss samt den daran befestigten Glasarmaturen angehoben wird, so dass es nicht mehr in die Heizflüssigkeit eingetaucht ist. Die Bäder haben nämlich in allen Fällen den Nachteil, relativ träge zu sein, so dass ein Unterbrechen der Heizleistung in vielen Fällen nicht ausreichend ist, um eine bestimmte Reaktion abzubrechen.

Bei Rotationsverdampfern werden aus diesem Grund sogenannte Schnellhebestative eingesetzt, die entweder unter Federvorspannung stehen und/oder mit einem Antriebsmotor versehen sind, so dass das Reaktionsgefäss raschmöglichst aus dem Bad herausgehoben werden kann. In bestimmten Fällen wird auch das Bad abgesenkt. Vorrichtungen dieser Art sind beispielsweise durch die EP-A-156 937 oder durch die DE-A-35 19 704 bekannt geworden. Ersichtlicherweise sind derartige Hebe- bzw. Senkvorrichtung sehr aufwendig. Bei automatisierten Geräten mit Zeitschaltung und Elektromotor besteht ausserdem die Gefahr, dass z.B. bei einem Stromausfall das Reaktionsgefäss in das heisse Bad eingetaucht bleibt, so dass ggf. unerwünschte Reaktionen eintreten können. Schliesslich stellt auch das Hantieren über dem mit heisser Flüssigkeit gefüllten Bad eine ständige Gefahr dar, wobei insbesondere beim Oelbad eine latente Verbrennungsgefahr besteht.

Es ist daher eine Aufgabe der Erfindung, einen Rotationsverdampfer der eingangs genannten Art zu schaffen, bei dem zum Unterbrechen des Heizvorgangs keine aufwendigen Hebevorrichtungen mehr erforderlich sind. Die Vorrichtung soll einfach und bedienungsfreundlich sein und ein grösstmögliches Mass an Betriebssicherheit aufweisen. Ausserdem soll der Wärmehaushalt optimiert werden. Diese Aufgabe wird erfindungsgemäss mit einem Rotationsverdampfer mit den Merkmalen von Anspruch 1 gelöst.

Der Heizvorgang spielt sich damit ersichtlicherweise nicht mehr unmittelbar im Gefäss bzw. um das Gefäss ab, in dem das Reaktionsgefäss eingetaucht ist. Vielmehr wird bei der Flüssigkeit in einem separaten Gefäss Wärme zugeführt bzw. entzogen, und diese Flüssigkeit wird dann der Wanne zugeführt, in der das Reaktionsgefäss angeordnet ist. Zum Beenden der Reaktion wird der Förderprozess unterbrochen und die Wanne in kürzest möglicher Zeit entleert. Ein Heben und Senken des Reaktionsgefässes relativ zur Wanne ist nicht mehr erforderlich, wodurch wesentlich einfachere Stative eingesetzt werden können. Die Flüssigkeitsmenge kann dabei eventuell reduziert werden, da die Form der Wanne optimal der Form des Reaktionsgefässes angepasst werden kann.

Es sind zwar im Zusammenhang mit Kühlgeräten bereits Kühlbäder bekannt geworden, die aus einem tieferliegenden Vorratsbehälter gespeist werden und die teilweise sogar völlig entleerbar sind. Beispiele dafür sind in der GB-A-1 541 905 oder in der US-A-3 468 136 beschrieben. Diese Vorrichtungen erfüllen jedoch ganz andere Aufgaben und eignen sich nicht für den Gebrauch im Zusammenhang mit einem Rotationsverdampfer.

Eine besonders hohe Betriebssicherheit und ein optimaler Wärmehaushalt lassen sich erzielen, weil der Vorratsbehälter unter der Wanne angeordnet ist und weil die Wanne den Vorratsbehälter wenigstens teilweise abschliesst. Der Vorratsbehälter mit der Flüssigkeit ist dabei vollständig abgedeckt und es können im Ruhezustand nur äusserst geringe Flüssigkeitsverluste durch Verdampfung eintreten. Ausserdem ist die Wanne im Ruhezustand geleert und es besteht nicht die Gefahr, dass beim Hantieren ein Gegenstand in die Flüssigkeit fallen kann.

Weitere Vorteile lassen sich erreichen, wenn der Flüssigkeitsablauf an der Wanne als vorzugsweise verstellbarer Über-lauf, wie z.B. als höhenverstellbarer Schieber in der Wannenwand, ausgebildet ist, mit dem das Flüssigkeitsniveau in der Wanne einstellbar ist. Auf diese Weise lässt sich das gewünschte Flüssigkeitsniveau rasch der Grösse des einzutauchenden Reaktionsgefässes anpassen. Die Flüssigkeitsverdrängung des Reaktionsgefässes muss nicht mehr wie bis anhin berücksichtigt werden, da beim Eintauchen eines grösseren Gefässes die überschüssige Flüssigkeit einfach über den Überlauf abfliesst. Dadurch wird das Hantieren für die Bedienungsperson wesentlich erleichtert.

Besondere Vorteile können auch noch erreicht werden, wenn die Wanne zweiteilig ausgebildet ist und einen relativ zum Vorratsbehälter feststehenden Wannenkörper mit einem vertikal verschiebbaren Wannenrand aufweist. Mit Hilfe des verschiebbaren Wannenrandes kann das Fassungsvermögen der Wanne ersichtlicherweise verändert werden. Dabei kann der verschiebbare Wannenrand selbst den Überlauf für die Begrenzung des Flüssigkeitsniveaus in der Wanne bilden, so dass durch Verschieben des Wannenrandes auch noch das Flüssigkeitsniveau eingestellt werden kann.

Besonders vorteilhaft wird der verschiebbare Wannenrand am Wannenkörper geführt. Dies ist besonders einfach möglich, wenn die Wanne rotationssymmetrisch ausgebildet ist. Sie könnte aber auch eine andere Grundfläche aufweisen. Der verschiebbare Wannenrand ist dabei vorzugsweise rohrförmig ausgebildet. Er könnte z.B. aber auch die Form eines Faltenbalges aufweisen, der auf geeignete Weise geführt und gestützt wird.

Der verschiebbare Wannenrand könnte z.B. manuell auf die gewünschte Höhe eingestellt und auf geeignete Weise am Wannenkörper fixiert werden. Eine besonders zweckmässige Verschiebung des Wannenrandes ergibt sich jedoch, wenn dieser einen in den Wannenkörper ragenden Schwimmkörper aufweist, dessen Auftrieb genügend gross ist, dass beim Einspeisen von Flüssigkeit in die Wanne der verschiebbare Wannenrand von einer unteren Ruheposition in eine obere Betriebsposition verschiebbar ist. Die obere Betriebsposition kann dabei durch einen Anschlag einstellbar sein. Auf diese Weise wird der Wannenrand beim Füllen der Wanne automatisch nach oben geschoben und bleibt so lange in dieser Position, bis die Flüssigkeit wieder aus der Wanne abläuft. Dann verschiebt sich der Wannenrand wieder zurück in die untere Ruheposition. Dies hat den Vorteil, dass die Wanne in der Ruheposition wenig Platz beansprucht, so dass über der Wanne ungehindert und frei hantiert werden kann. Erst beim Inbetriebsetzen der Vorrichtung wird die maximale Wannenhöhe erreicht. Der Schwimmkörper ist vorzugsweise als eine nach unten geöffnete Hohlkammer ausgebildet. Ein derartiger Hohlkörper lässt sich fabrikationstechnisch einfach herstellen und bewirkt durch die von der Flüssigkeit eingeschlossene Luft einen ausreichenden Auftrieb.

Für einen optimalen Flüssigkeitsrücklauf ist der verschiebbare Wannenrand vorzugsweise als Hohlwand ausgebildet, wobei die Innenwand der Hohlwand den Überlauf bildet und die Aussenwand der Hohlwand die Innenwand etwas überragt. Die Aussenwand dient somit auch noch als Schutz für den Überlauf.

Wenn die Speiseleitung zu einer Öffnung im Boden der Wanne führt und wenn die Speiseleitung von der Öffnung gegen den Vorratsbehälter ein Gefälle aufweist, kann die Entleerung der Wanne ohne Pumpenleistung erfolgen. Dabei erübrigt sich weiter die Verwendung eines speziellen Ventils, wenn die Umwälzvorrichtung eine Tauchpumpe ist, die im Vorratsbehälter angeordnet und an die Speiseleitung angeschlossen ist. Sobald die Tauchpumpe ausgeschaltet ist, fliesst die Flüssigkeit aus der Wanne durch die Tauchpumpe zurück in den Vorratsbehälter. Die Rücklaufgeschwindigkeit ist dabei eine Frage der Dimensionierung von Speiseleitung und Pumpe.

Wenn die Wanne wenigstens teilweise konkav ausgebildet ist, können die bei der Destillation üblicherweise verwendeten Glaskolben ohne Standfläche besonders einfach in der Wanne abgestellt werden. Ausserdem ist die Wannenform derartigen Glaskolben optimal angepasst, so dass die Flüssigkeitsmenge in der Wanne so tief wie möglich gehalten werden kann. Die Öffnung im Wannenboden, über welche die Flüssigkeit in die Wanne eintritt, ist vorzugsweise so angeordnet, dass eine turbulente Wirbelströmung entsteht. Auf diese Weise lässt sich sogar ein ruhender Kolben schnell erwärmen, so dass in bestimmten Fällen auf die Rotation des Kolbens verzichtet werden kann.

Weitere Vorteile und Einzelmerkmale der Erfindung ergeben sich aus der nachfolgenden Beschreibung und aus den Zeichnungen. Es zeigen:
- Figur 1: Eine teilweise geschnittene Seitenansicht eines Heizbades für einen Rotationsverdampfer,
- Figur 2: eine Draufsicht auf die Vorrichtung gemäss Figur 1,
- Figur 3: einen Schnitt durch die Ebene I-I gemäss Figur 1,
- Figur 4: einen Querschnitt durch ein abgewandeltes Ausführungsbeispiel mit seitlich verschiebbarer Wannenwand,
- Figur 5: eine Seitenansicht eines Rotationsverdampfers,
- Figur 6: eine Draufsicht auf die Verdampferanordnung gemäss Figur 5,
- Figur 7: ein weiteres Ausführungsbeispiel eines Heizbades mit hohenmässig verschiebbarem Wannenrand, und
- Figur 8: eine Draufsicht auf das Ausführungsbeispiel gemäss Figur 7.

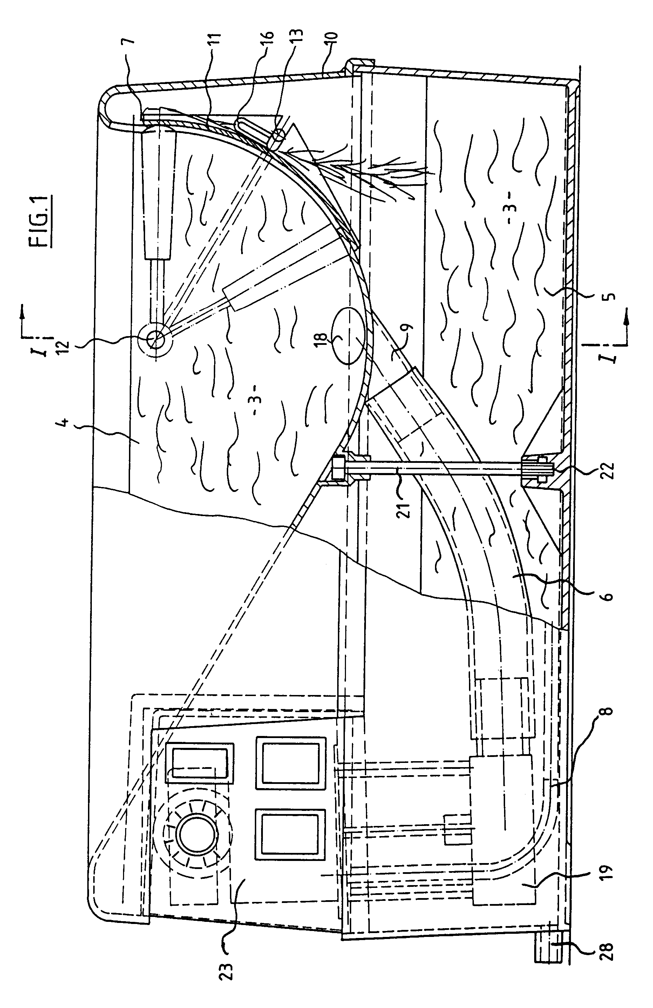

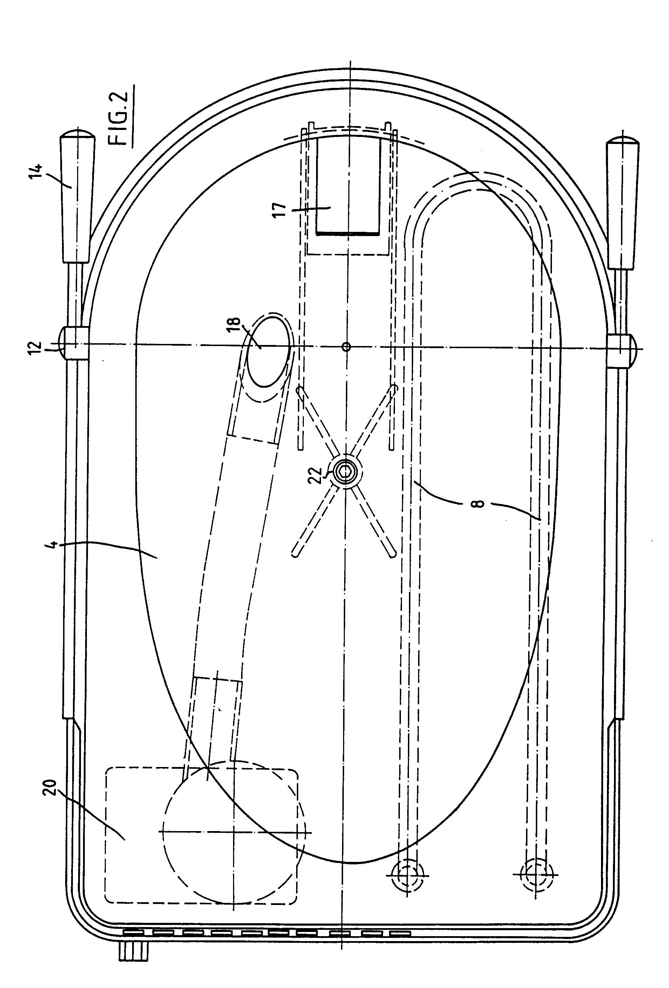

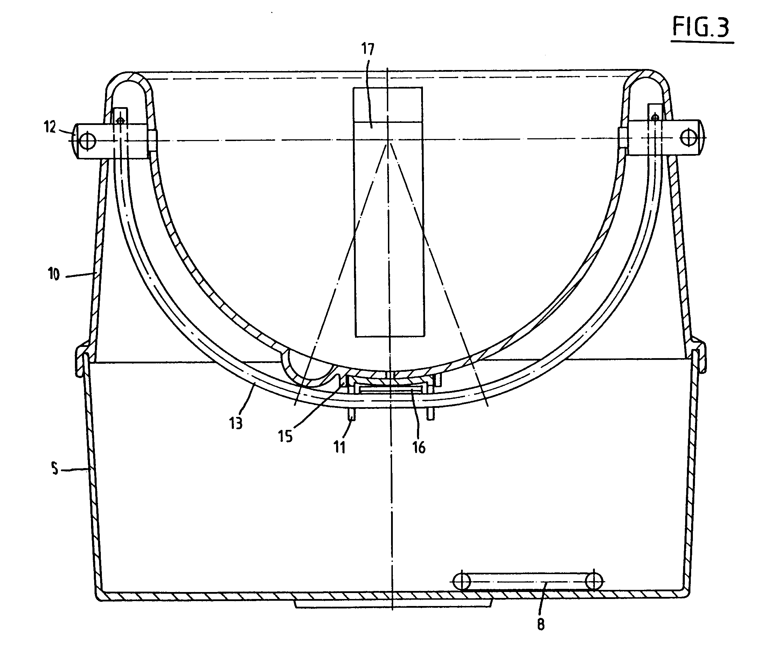

Wie aus den Figuren 1 bis 3 ersichtlich ist, besteht das Heizbad im wesentlichen aus zwei Gehäuseteilen, nämlich aus einem Vorratsbehälter 5 und aus einer darauf abgestützten Wanne 4. Die Wanne 4 ist dabei als Deckel 10 ausgebildet, welcher den Vorratsbehälter 5 praktisch hermetisch verschliesst. Diese beiden Gehäuseteile können beispielsweise aus einem Kunststoffmaterial oder aus Metall gefertigt sein.

Am Boden des Vorratsbehälters 5 ist ein Gewindesockel 22 angeordnet, der wie dargestellt durch Rippen verstärkt sein kann. Mit Hilfe einer zentralen Schraube 21, welche in den Gewindesockel 22 eingeschraubt wird, lässt sich so die Wanne 4 auf dem Vorratsbehälter 5 befestigen.

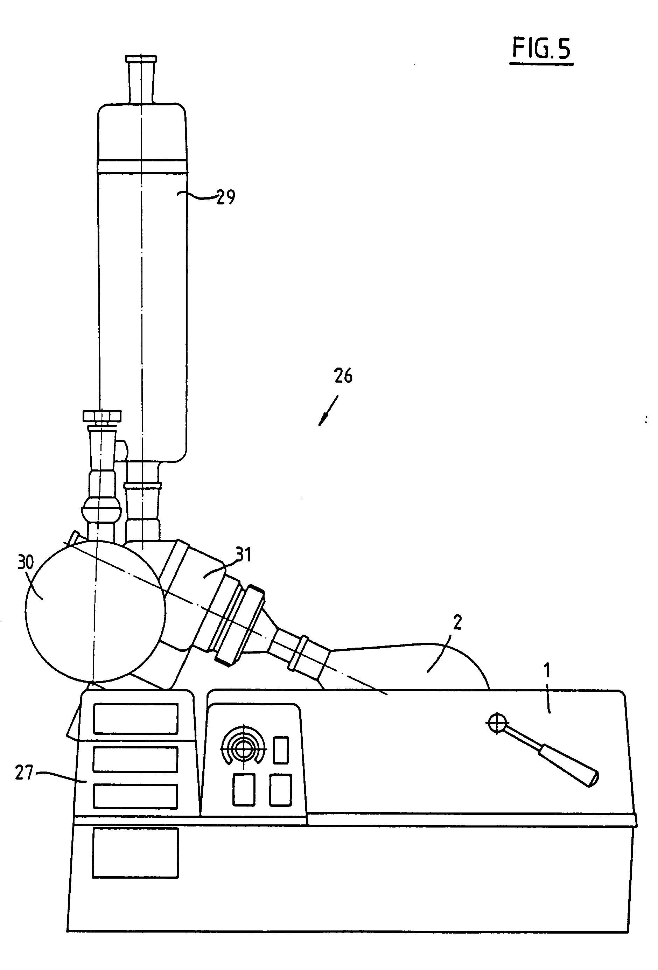

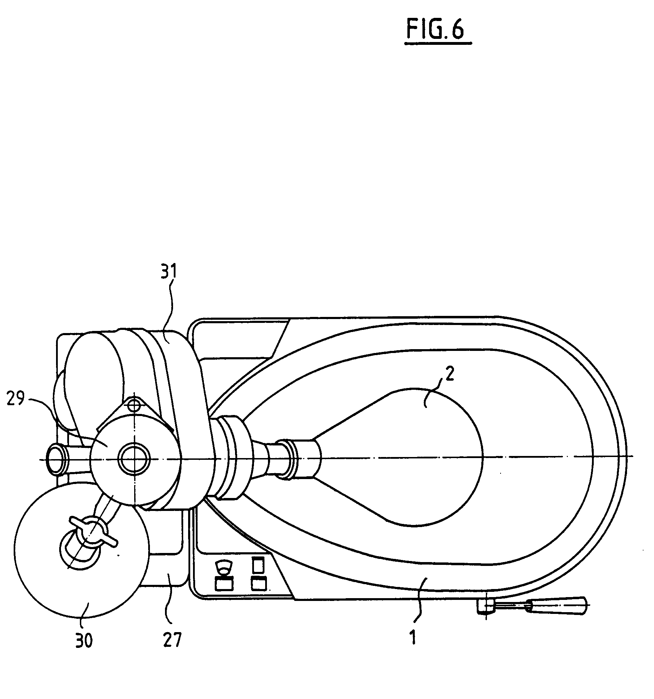

Die Wanne hat gemäss Ausführungsbeispiel eine sich von rechts nach links verjüngende Querschnittsform, wobei der rechte Abschnitt der Wanne etwa kugelförmig ausgebildet ist. Diese Form ist besonders optimal den schräg eingetauchten Destillationskolben angepasst, wie aus den Figuren 5 und 6 ersichtlich ist.

Auf der rechten Seite der Wanne 4 ist in der Wannenwand ein Schlitz 17 angeordnet, der sich über etwa 60° erstreckt. Dieser Schlitz kann durch einen Schieber 11 ganz oder teilweise verschlossen werden, der von aussen gegen die Wannenwand gepresst wird. Der Schieber 11 gleitet dabei in einer Führung 15, die durch zwei parallele Rippen auf der Aussenseite der Wannenwand gebildet wird.

Zum Betätigen des Schiebers ist ein etwa halbkreisförmiger Bügel 13 auf beiden Seiten der Wanne 4 an Gelenken 12 befestigt. Der Bügel 13 greift in den Schieber 11 ein und kann von aussen mit Hilfe eines Hebels 14 verschwenkt werden. Zwischen dem Bügel 13 und dem Schieber 11 ist eine Feder 16 gespannt, so dass der Schieber dichtend gegen die Wannenwand gepresst wird. Die Reibung genügt dabei, um den Schieber in der jeweils gewählten Position zu fixieren. Selbstverständlich wären aber auch noch andere Schieberanordnungen bzw. Betätigungsvorrichtungen für den Schieber denkbar.

Mit Hilfe des Schiebers wird ein Flüssigkeitsablauf 7 erreicht, wobei sich das Niveau der Flüssigkeit 3 in der Wanne 4 je nach Schieberstellung einstellen lässt.

Etwas seitlich versetzt am Boden der Wanne ist eine Öffnung 18 angeordnet, die in einen Stutzen 9 mündet. An diesen Stutzen ist eine Speiseleitung 6 angeschlossen, welche mit Gefälle von der Öffnung 18 gegen den Boden des Vorratsbehälters 5 geführt ist. Die Speiseleitung ist am unteren Ende an eine Tauchpumpe 19 angeschlossen, welche in die Flüssigkeit 3 im Vorratsbehälter 5 eingetaucht ist.

Die Tauchpumpe 19 wird durch einen Motor 20 angetrieben, der unmittelbar unter der Wanne 4 angeordnet ist. Die Speiseleitung 6 ist vorzugsweise als flexibler Schlauch ausgebildet, der auf den Auslass der Tauchpumpe bzw. auf den Stutzen 9 aufgesteckt werden kann.

Seitlich neben der Tauchpumpe bzw. der Speiseleitung ist am Boden des Vorratsbehälters 5 eine Heizeinrichtung 8 in der Form eines Heizstabes angeordnet, der sich fast über die gesamte Länge des Vorratsbehälters erstreckt. Auch die Heizeinrichtung 8 ist wie die Tauchpumpe 19 bzw. deren Motor 20 unter der Wanne 4 befestigt, so dass beim Lösen der Befestigungsschraube 21 die gesamte Einheit aus dem Vorratsbehälter 5 gehoben werden kann. Das Schöpfniveau der Tauchpumpe 19 liegt etwas über der Ebene der Heizeinrichtung 8, so dass der Heizstab auch bei ungenügender Flüssigkeitsmenge immer mit Flüssigkeit bedeckt bleibt. Ein zu niedriger Flüssigkeitspegel wird durch ein gurgelndes Pumpengeräusch und durch starke Dampfentwicklung angezeigt. Als Überhitzungsschutz kann jedoch ausserdem ein Thermostat vorgesehen sein.

Zum Entleeren des Vorratsbehälters 5 kann ein Ablaufstutzen 28 angeordnet sein. Für eine Kontrolle des Pegelstands im Vorratsbehälter 5 wäre es auch denkbar und zweckmässig, einen Pegelstandsmesser mit Hilfe eines Schwimmers einzubauen, oder einen Abschnitt des Vorratsbehälters 5 transparent auszubilden und mit einer Skala zu versehen. An einem Bedienungstableau 23 können die verschiedenen Funktionen wie z.B. Pumpe ein/aus, Heizung ein/aus oder Heiztemperatur eingestellt werden.

Im Betrieb wird die im Vorratsbehälter 5 gespeicherte Flüssigkeit 3 durch die Heizeinrichtung 8 auf die gewünschte Betriebstemperatur aufgeheizt. Um zu lange Wartezeiten zu vermeiden, kann die Heizung permanent eingeschaltet bleiben. Für einen Destilliervorgang wird ein Reaktionsgefäss 2 mit Hilfe eines Stativs in die noch leere Wanne 4 eingetaucht und das gewünschte Flüssigkeitsniveau wird mit Hilfe des Schiebers 11 eingestellt. Anschliessend wird die Tauchpumpe 19 betätigt, so dass über die Speiseleitung 6 und die Öffnung 18 die aufgeheizte Flüssigkeit 3 in die Wanne 4 gepumpt wird. Die Wanne 4 füllt sich bis zum gewünschten Flüssigkeitsniveau und die Flüssigkeit fliesst dann durch den Schlitz 17 über den Ablauf 7 wieder zurück in den Vorratsbehälter 5. Sobald der Heizvorgang in der Wanne 4 unterbrochen werden soll, wird die Tauchpumpe 19 ausgeschaltet, was beispielsweise auch automatisch über eine Zeitschaltung erfolgen kann, wonach die Flüssigkeit aus der Wanne 4 über die Speiseleitung 6 und die Pumpe 19 sofort zurückfliesst in den Vorratsbehälter 5. Der gleiche Vorgang spielt sich auch beispielsweise bei einem unvorgesehenen Stromausfall ab, so dass eine in Gang befindliche Reaktion im Gefäss sofort unterbrochen wird.

In bestimmten Fällen wäre es auch denkbar, die aufgeheizte Flüssigkeit von oben über das Reaktionsgefäss zu giessen und die Wanne 4 nur als Auffangbehälter und Ablauf zu verwenden. Auch eine Kombination von Einspeisen der Flüssigkeit über den Wannenboden und Übergiessen über das Reaktionsgefäss wäre denkbar.

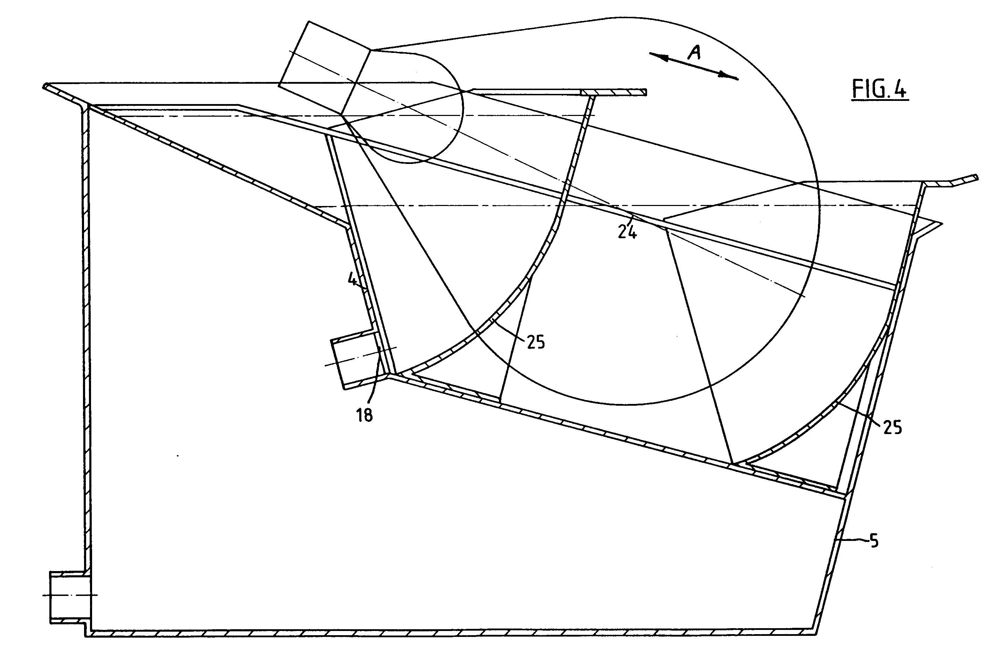

In Figur 4 ist ein alternatives Ausführungsbeispiel dargestellt, bei welchem der Wannenrand der Wanne 4 eine Schrägneigung aufweist. Die Wanne ist mit einer Seitenwand 25 versehen, welche in Pfeilrichtung A innerhalb der Wanne verschiebbar angeordnet ist. Auf diese Weise kann der Wanneninhalt und damit deren Flüssigkeitsinhalt verändert werden. Die Darstellung zeigt die Seitenwand 25 ganz rechts bei grösstmöglichem Wanneninhalt und ganz links bei kleinstmöglichem Wanneninhalt. Die Öffnung 18 ist derart angeordnet, dass sie durch die verschiebbare Seitenwand 25 in keiner Position verdeckt wird. Durch den schrägen Wannenrand 24 lässt sich auch das Flüssigkeitsniveau in der Wanne 4 je nach Stellung der verschiebbaren Seitenwand 25 einstellen. Jeweils am Kreuzungspunkt zwischen dem Wannenrand 24 und der Seitenwand 25 fliesst die Flüssigkeit über den Wannenrand, und zwar entweder beidseitig oder nur auf einer Seite, je nach Konfiguration des Wannenrandes. Tauchpumpe und Heizeinrichtung sind beim Ausführungsbeispiel gemäss Figur 4 nicht dargestellt. Diese Bauteile können jedoch gleich oder ähnlich wie beim Ausführungsbeispiel gemäss Figur 1 ausgebildet sein.

In den Figuren 5 und 6 ist der Rotationsverdampfer 26 in Gesamtansicht mit dem Heizbad 1 dargestellt. Der Rotationsverdampfer besteht im wesentlichen aus einem Stativ 27, das jedoch nicht mehr mit einer Schnellhebevorrichtung versehen sein muss. Das Reaktionsgefäss 2 ist an einer Antriebsvorrichtung 31 befestigt, an der es um seine Achse gedreht werden kann. Am Stativ ist auch ein Kühler 29 und ein Destillatgefäss 30 befestigt.

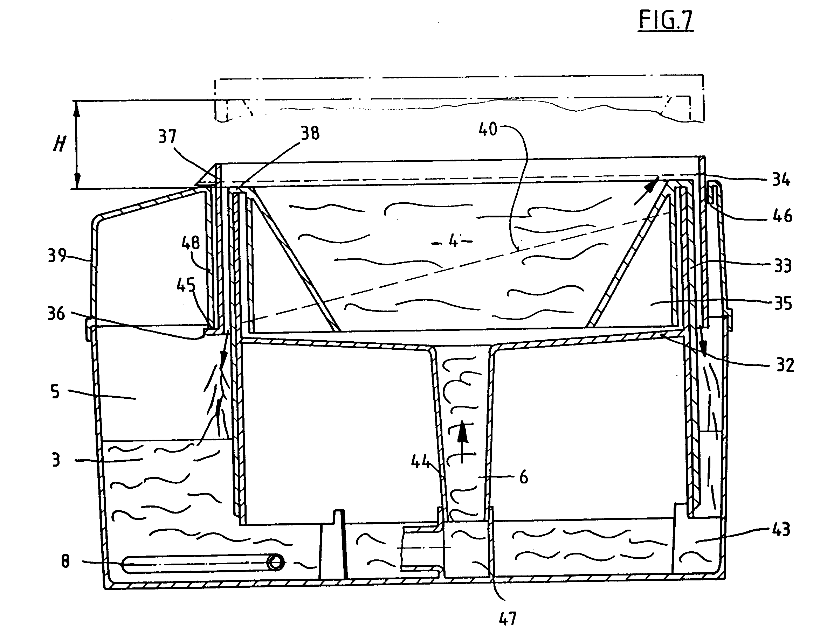

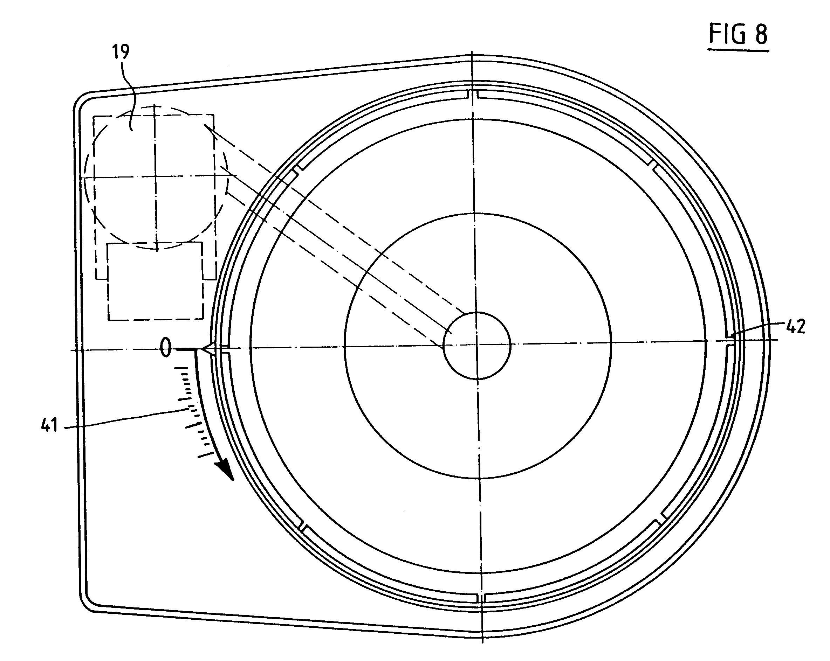

In den Figuren 7 und 8 ist ein Ausführungsbeispiel eines Heizbades dargestellt, dessen Wannenrand vertikal verschiebbar ist, so dass das Gesamtvolumen der Wanne innerhalb bestimmter Grenzen gewählt werden kann. Der Vorratsbehälter 5 für die Flüssig keit 3 besteht ebenfalls aus einem Gefäss, an dessen Boden eine Heizeinrichtung 8 angeordnet ist. Auch die Tauchpumpe 19 ist ähnlich wie bei den übrigen Ausführungsbeispielen so angeordnet, dass die Heizung nicht trockenfallen kann.

Die Wanne 4 ist jedoch nicht als Deckel ausgebildet, der den Vorratsbehälter 5 praktisch ganz abschliesst. Die Wanne ist vielmehr in einen Abschlussrahmen 39 eingelassen, der auf den Vorratsbehälter 5 aufgesetzt ist. Die Wanne ist rotationssymmetrisch ausgebildet, könnte aber auch einen anderen Grundriss haben.

Die Wanne ist zweiteilig ausgebildet und besteht aus einem Wannenkörper 32, der auf Stützen 43 etwas erhöht auf dem Boden des Vorratsbehälters 5 ruht. Der Wannenkörper 32 verjüngt sich im Zentrum trichterartig zu einem Steigrohr 44, das einen Bestandteil der Speiseleitung 6 bildet. Das Steigrohr 44 mündet in einen fest angeordneten Bodenstutzen 47, von dem aus eine Leitung zur Tauchpumpe 19 führt. Die ganze Wanne 4 lässt sich auf diese Weise leicht aus dem Vorratsbehälter 5 herausheben, was die Demontage und Reinigung erleichtert.

Die Wanne 4 weist ferner einen vertikal verschiebbaren Wannenrand 33 auf, der auf der Aussenseite des Wannenkörpers 32 geführt ist. Der Wannenrand 33 ist dabei über einen bestimmten Abschnitt als Hohlwand ausgebildet, dessen Innenwand 38 einen Überlauf 34 für die Flüssigkeit bildet. Die Aussenwand 37 der Hohlwand überragt die Innenwand 38 etwas, so dass der Überlauf geschützt ist und ein Überlaufen der Flüssigkeit über den Abschlussrahmen verhindert wird. Die Flüssigkeit fliesst in der Hohlwand zurück in den vorratsbehälter 5. Die Aussenwand 37 ist an der Innenwand 38 mit Hilfe von radialen Rippen 42 befestigt, wie aus Figur 8 ersichtlich ist.

Die Führung zwischen der Innenwand 38 und der Seitenwand des Wannenkörpers 32 ist so ausgebildet, dass sich dazwischen ein dünner Flüssigkeitsfilm bilden kann. Dieser Flüssigkeitsfilm reduziert die Reibung wesentlich, so dass der verschiebbare Wannenrand 33 mühelos bewegt werden kann.

Einstückig mit der Innenwand 38 verbunden ist ein in den Wannenkörper 32 ragender Schwimmkörper 35. Dieser ist als ein nach unten geöffneter Hohlring ausgebildet, wobei sich die Innenwand des Hohlrings nach unten konisch verjüngt. Bei dieser Konfiguration kann ein Glaskolben ohne Standfläche ebenfalls mühelos in der Wanne abgestellt werden.

Der Schwimmkörper 35 vermittelt dem verschiebbaren Wannenrand 33 einen Auftrieb, so dass beim Füllen der Wanne 4 über das Steigrohr 44 der Wannenrand 33 von einer unteren Ruhelage in eine obere Betriebslage verschoben wird. Um das gewünschte Flüssigkeitsniveau bzw. die obere Betriebslage einzustellen, ist ein Anschlag vorgesehen, dessen Endposition durch Drehen des verschiebbaren Wannenrandes um die eigene Achse gewählt werden kann.

Wie dargestellt ist der Abschlussrahmen 39 mit einem rohrförmigen Fortsatz 48 versehen, der die Aussenwand 37 der Hohlwand umgibt. Dieser Fortsatz weist eine Führungskurve 40 auf, welche sich etwa über 180° erstreckt. An der Aussenwand 37 ist ein Anschlagnocken 36 angeordnet, der mit der Führungskurve 40 zusammenwirkt. Je nach der Winkelposition des Anschlagnockens 36 relativ zur Führungskurve 40 kann der Wannenrand 33 einen grösseren oder kleineren Hub H zurücklegen. In Figur 7 ist der Anschlagnocken 36 in der untersten Stellung 45 dargestellt, in welcher überhaupt kein Hub zurückgelegt wird. Beim Füllen der Wanne 4 verbleibt der ganze Wannenrand 33 mit dem Schwimmkörper 35 in der untersten Position. Durch Drehen des Wannenrandes 33 um 180° kann der Anschlagnocken 36 in die oberste Stellung 46 gebracht werden, so dass der Wannenrand beim Einfüllen von Flüssigkeit in die Wanne 4 seinen maximalen Hub zurücklegen kann. Die oberste mögliche Stellung des Wannenrandes ist in unterbrochenen Linien dargestellt. Wie in Figur 8 ersichtlich, kann auf dem Abschlussrahmen 39 eine Skala 41 angebracht sein, auf welcher der gewünschte Hub eingestellt bzw. abgelesen werden kann. Selbstverständlich liesse sich die Hubbegrenzung auch auf andere Art und Weise realisieren.

Beim Ausführungsbeispiel gemäss den Figuren 7 und 8 lassen sich die Aussenabmessungen des Heizbades weiter optimieren. Die Wannengrösse kann praktisch dem einzutauchenden Objekt angepasst werden, wobei in der Ruhestellung der Wannenrand immer in der tiefstmöglichen Stellung angeordnet ist.

Anstelle von Wasser oder Oel könnten auch andere geeignete Wärmeträgerflüssigkeiten eingesetzt werden.

## Patentansprüche

1. Rotationsverdampfer mit einem Stativ (27) und mit einer Antriebsvorrichtung (31) für die drehbare Befestigung eines Reaktionsgefässes (2) sowie mit einem neben dem Stativ angeordneten Heizbad (1) mit einer oben offenen Wanne (4) zur Aufnahme einer Heizflüssigkeit, wobei das Reaktionsgefäss (2) in die Wanne eintauchbar ist, gekennzeichnet durch:
- einen unter der Wanne angeordneten Vorratsbehälter (5) für die Heizflüssigkeit, wobei die Wanne den Vorratsbehälter wenigstens teilweise abschliesst,
- eine Speiseleitung (6) für die Zufuhr von Flüssigkeit vom Vorratsbehälter zur Wanne, wobei die Speiseleitung mit einer Öffnung (18) im Boden der Wanne verbunden ist und gegen den Vorratsbehälter ein Gefälle aufweist,
- einen Flüssigkeitsablauf (7) an der Wanne in der Form eines Überlaufs, über den Heizflüssigkeit aus der Wanne in den Vorratsbehälter rückführbar ist,
- eine Heizeinrichtung im Vorratsbehälter,
- sowie eine an die Speiseleitung angeschlossene Tauchpumpe (19, 20) zum Fördern von Heizflüssigkeit aus dem Vorratsbehälter in die Wanne,
- wobei durch Abschalten der Tauchpumpe der gesamte Inhalt der Wanne durch die Speiseleitung und die Tauchpumpe in den Vorratsbehälter entleerbar ist.

2. Rotationsverdampfer nach Anspruch 1, dadurch gekennzeichnet, dass der Überlauf an der Wanne (4) zum Einstellen des Flüssigkeitsniveau's verstellbar ausgebildet ist.

3. Rotationsverdampfer nach Anspruch 2, dadurch gekennzeichnet, dass die Wanne (4) zweiteilig ausgebildet ist und einen relativ zum Vorratsbehälter (5) feststehenden Wannenkörper (32) mit einem vertikal verschiebbaren Wannenrand (33) aufweist.

4. Rotationsverdampfer nach Anspruch 3, dadurch gekennzeichnet, dass der verschiebbare Wannenrand (33) am Wannenkörper (32) geführt ist.

5. Rotationsverdampfer nach Anspruch 3 oder 4, dadurch gekennzeichnet, dass der verschiebbare Wannenrand (33) einen in den Wannenkörper (32) ragenden Schwimmkörper (35) aufweist, dessen Auftrieb genügend gross ist, dass beim Einspeisen von Flüssigkeit (3) in die Wanne (4) der verschiebbare Wannenrand (33) von einer unteren Ruheposition in eine obere Betriebsposition verschiebbar ist.

6. Rotationsverdampfer nach Anspruch 5, dadurch gekennzeichnet, dass die obere Betriebsposition des verschiebbaren Wannenrandes (33) durch einen Anschlag (36, 40) einstellbar ist.

7. Rotationsverdampfer nach Anspruch 5 oder 6, dadurch gekennzeichnet, dass der Schwimmkörper (35) als eine nach unten geöffnete Hohlkammer ausgebildet ist.

8. Rotationsverdampfer nach einem der Ansprüche 4 bis 7, dadurch gekennzeichnet, dass der verschiebbare Wannenrand (33) als Hohlwand ausgebildet ist, in der die Flüssigkeit (3) in den Vorratsbehälter (5) zurückführbar ist, wobei die Innenwand (38) der Hohlwand den Ueberlauf (34) bildet und die Aussenwand (37) der Hohlwand die Innenwand (38) etwas überragt.

9. Rotationsverdampfer nach Anspruch 2, dadurch gekennzeichnet, dass der Ueberlauf als höhenverstellbarer Schieber (11) in der Wannenwand ausgebildet ist.

10. Rotationsverdampfer nach Anspruch 2, dadurch gekennzeichnet, dass der Wannenrand (24) wenigstens teilweise mit einer Neigung zur Horizontalen ausgebildet ist, und dass der Ueberlauf als Seitenwand (25) ausgebildet ist, die in der Wanne (4) im Bereich der Neigung verschiebbar ist, wobei die Flüssigkeit an dem durch die Seitenwand bestimmten tiefsten Punkt der Neigung über den Wannenrand fliesst.

11. Rotationsverdampfer nach einem der Ansprüche 1 bis 10, dadurch gekennzeichnet, dass die Heizeinrichtung (8) flächig am Boden des Vorratsbehälters (5) angeordnet ist, und dass das Schöpfniveau der Tauchpumpe (19) im Abstand über der Heizeinrichtung liegt.

12. Rotationsverdampfer nach einem der Ansprüche 1 bis 11, dadurch gekennzeichnet, dass die Wanne (4) wenigstens teilweise konkav ausgebildet ist.

## Claims

1. A rotary evaporator comprising a support (27) and a drive device (31) for rotatably fixing a reaction vessel (2), and a heating bath (1) arranged beside the support with an upwardly open tank (4) for accommodating a heating liquid, wherein the reaction vessel (2) can be immersed in the tank, characterised by:
- a storage container (5) for the heating liquid, which is disposed below the tank, wherein the tank at least partially closes off the storage container,
- a supply conduit (6) for the feed of liquid from the storage container to the tank, wherein the supply conduit is connected to an opening (18) in the bottom of the tank and has a fall towards the storage container,
- a liquid discharge (7) on the tank in the form of an overflow by way of which heating liquid can be returned from the tank to the storage container,
- a heating means in the storage container, and
- a submersible pump (19, 20) connected to the supply conduit for conveying heating liquid from the storage container into the tank,
- wherein by switching off the submersible pump the entire content of the tank can be emptied into the storage container through the supply conduit and the submersible pump.

2. A rotary evaporator according to claim 1 characterised in that the overflow on the tank (4) is adapted to be adjustable for adjusting the level of liquid.

3. A rotary evaporator according to claim 2 characterised in that the tank (4) is of a two-part construction and has a tank body (32) which is stationary relative to the storage container (5), with a vertically displaceable tank edge (33).

4. A rotary evaporator according to claim 3 characterised in that the displaceable tank edge (33) is guided on the tank body (32).

5. A rotary evaporator according to claim 3 or claim 4 characterised in that the displaceable tank edge (33) has a float body (35) which projects into the tank body (32) and the buoyancy of which is sufficiently great that when liquid (3) is fed into the tank (4) the displaceable tank edge (33) is displaceable from a lower rest position into an upper operative positoin.

6. A rotary evaporator according to claim 5 characterisd in that the upper operative position of the displaceable tank edge (33) can be set by an abutment (36, 40).

7. A rotary evaporator according to claim 5 or claim 6 characterised in that the float body (35) is in the form of a downwardly opened hollow chamber.

8. A rotary evaporator according to one of claims 4 to 7 characterised in that the displaceable tank edge (33) is in the form of a hollow wall in which the liquid (3) can be returned to the storage container (5), wherein the inside wall (38) of the hollow wall forms the overflow (34) and the outside wall (37) of the hollow wall projects somewhat beyond the inside wall (38).

9. A rotary evaporator according to claim 2 characterised in that the overflow is in the form of a slider (11) which is adjustable in respect of height in the tank wall.

10. A rotary evaporator according to claim 2 characterised in that the tank edge (24) is formed at least in part with an inclination relative to the horizontal and in that the overflow is in the form of a side wall (25) which is displaceable in the tank (4) in the region of the inclination, wherein the liquid flows over the tank edge at the lowest point of the inclination, which is defined by the side wall.

11. A rotary evaporator according to one of claims 1 to 10 characterised in that the heating means (8) is arranged flat at the bottom of the storage container (5) and that the draw level of the submersible pump (19) is at a spacing above the heating means.

12. A rotary evaporator according to one of claims 1 to 11 characterised in that the tank is at least partially of a concave configuration.

## Revendications

1. Evaporateur rotatif comportant un statif (27) et un dispositif d'entraînement (31) pour la fixation mobile en rotation d'un réacteur (2), ainsi qu'un bain chauffant (1) disposé près du statif et formé d'une cuve (4) ouverte vers le haut destinée à recevoir un liquide chauffant, le réacteur (2) étant apte à être plongé dans la cuve, caractérisé par :
- un réservoir (5), disposé sous la cuve, pour le liquide chauffant, la cuve fermant au moins en partie le réservoir,
- une conduite d'alimentation (6) pour l'amenée de liquide du réservoir vers la cuve, ladite conduite d'alimentation étant reliée à une ouverture (18) ménagée dans le fond de la cuve, et présentant une inclinaison vers le réservoir,
- un écoulement de liquide (7), au niveau de la cuve, se présentant sous la forme d'un trop-plein par l'intermédiaire duquel le liquide chauffant peut être ramené de la cuve vers le réservoir,
- un dispositif chauffant dans le réservoir,
- ainsi qu'une pompe plongeante (19, 20) reliée à la conduite d'alimentation, pour transporter le liquide chauffant du réservoir vers la cuve,
- étant précisé que, grâce à la mise hors circuit de la pompe plongeante, tout le contenu de la cuve peut être vidé dans le réservoir au moyen de la conduite d'alimentation et de la pompe plongeante.

2. Evaporateur rotatif selon la revendication 1, caractérisé en ce que le trop-plein prévu au niveau de la cuve (4) est conçu pour être mobile en vue du réglage du niveau de liquide.

3. Evaporateur rotatif selon la revendication 2, caractérisé en ce que la cuve (4) est conçue en deux parties et comporte un corps de cuve (32) fixe par rapport au réservoir (5) et pourvu d'un bord mobile verticalement (33).

4. Evaporateur rotatif selon la revendication 3, caractérisé en ce que le bord de cuve mobile (33) est guidé au niveau du corps de cuve (32).

5. Evaporateur rotatif selon la revendication 3 ou 4, caractérisé en ce que le bord de cuve mobile (33) comporte un flotteur (35) qui fait saillie dans le corps de cuve (32) et dont la poussée verticale est suffisamment grande pour que, lors de l'amenée de liquide (3) dans la cuve (4), le bord de cuve mobile (33) soit mobile entre une position de repos basse et une position de fonctionnement haute.

6. Evaporateur rotatif selon la revendication 5, caractérisé en ce que la position de fonctionnement haute du bord de cuve mobile (33) est réglable grâce une butée (36, 40).

7. Evaporateur rotatif selon la revendication 5 ou 6, caractérisé en ce que le flotteur (35) est conçu comme une chambre creuse ouverte vers le bas.

8. Evaporateur rotatif selon l'une des revendications 4 à 7, caractérisé en ce que le bord de cuve mobile (33) est conçu comme une paroi creuse dans laquelle le liquide (3) peut être ramené dans le réservoir (5), étant précisé que la paroi intérieure (38) de la paroi creuse définit le trop-plein (34) et que la paroi extérieure (37) de la paroi creuse dépasse légèrement de la paroi intérieure (38).

9. Evaporateur rotatif selon la revendication 2, caractérisé en ce que le trop-plein est conçu comme une soupape à tiroir (11) réglable en hauteur dans la paroi de la cuve.

10. Evaporateur rotatif selon la revendication 2, caractérisé en ce que le bord de cuve (24) est pourvu au moins partiellement d'une inclinaison par rapport à l'horizontale, et en ce que le trop-plein est conçu comme une paroi latérale (25) qui est mobile dans la cuve (4) dans la zone de l'inclinaison, le liquide s'écoulant par-dessus le bord de la cuve au niveau du point le plus bas de l'inclinaison défini par la paroi latérale.

11. Evaporateur rotatif selon l'une des revendications 1 à 10, caractérisé en ce que le dispositif chauffant (8) est disposé à plat au fond du réservoir (5), et en ce que le niveau d'aspiration de la pompe plongeante (19) se trouve à une certaine distance au-dessus du dispositif chauffant.

12. Evaporateur selon l'une des revendications 1 à 11, caractérisé en ce que la cuve (4) a une forme au moins partiellement concave.
